# EUROPEAN PATENT SPECIFICATION

(11) **EP 0 833 849 B1**
(45) Date of publication and mention of the grant of the patent: **28.08.2002**
(21) Application number: 96922510.1
(22) Date of filing: 19.06.1996
(51) Int. Cl.: C08F 8/30, C08F 8/32, C08K 3/00, C08K 3/34

(54) **AIR CONTROLLING SUPERPLASTICIZERS**
LUFTREGULIERENDE SUPERWEICHMACHER
SUPERPLASTIFIANTS PERMETTANT UNE REGULATION DE L'AIR

(30) Priority: 21.06.1995 US 493036; 21.06.1995 US 493046
(43) Date of publication of application: 08.04.1998
(73) Proprietor: W.R. GRACE & CO.-CONN., New York New York 10036 (US)
(72) Inventor: ARFAEI, Ahmad, Chelmsford, MA 01824 (US); LAMBERT, James, F., Chestnut Hill, MA 02167 (US)
(74) Representative: Senior, Alan Murray
(86) International application number: US9610597
(87) International publication number: WO97000898

(56) References cited:
- EP-A- 0 523 480
- WO-A-95/09821
- DE-A- 4 338 867
- US-A- 5 393 343

## Description

### FIELD OF THE INVENTION

This invention relates to hydraulic cement admixtures, particularly to certain polymeric additives for hydraulic cement compositions which impart to the wet cement composition greater plasticity, lower slumploss over time, and water reduction capability without the problems of air entrainment associated with prior polymeric additives of this type.

### BACKGROUND OF THE INVENTION

Various types of organic compounds have been used to advantageously alter certain properties of wet hydraulic cement compositions. One class of compounds, which can collectively be called "superplasticizers", fluidify or plasticize the wet cement composition to obtain a more fluid composition at a given water to cement ratio. A controlled fluidity is desired, such that the aggregate used in mortars and concretes does not segregate from the cement paste. Alternatively, superplasticizers may allow the cement composition to be prepared using a lower water to cement ratio, in order to obtain a composition having a desired consistency (often leading to a hardened cement composition having a greater compressive strength after setting.)

A good superplasticizer should not only fluidify the wet cement composition to which it is added, but maintain that level of fluidity over a desired period of time. This time should be long enough to keep the wet cement composition fluid, for example, in a ready-mix truck while it is on its way to a job site, while the truck is idling at the job site, and while the cement composition is being worked into the desired final form. However, the cement mixture cannot remain fluid for too long, i.e., the set must not be greatly retarded, because this will hold up work on the job. Commonly known types of superplasticizers include: melamine sulfonate-formaldehyde condensates, napthaleriesulfonate-formaldehyde condensates, lignosulfonates, polysaccharides, hydroxycarboxylic acids and their salts, and carbohydrates.

One of the problems associated with the addition of superplasticizers is their often adverse affect on the quality and quantity of entrained air in the mix. Some air is inevitable and imparts beneficial properties to structural concrete, e.g., freeze-thaw stability of the hardened cement mass; improved workability of the wet cement composition; and mitigation of bleeding. In fact, the proper use of air entrainers in cement compositions results in these benefits. However, too much and/or uncontrolled or poor quality air is detrimental to concrete and mortar. This problem is particularly acute with polyoxyalkylene-based polymer superplasticizers, e.g., U. S. Patent Nos. 4,814,014 or 4,946,904. The use of defoamers or air detrainers in conjunction with such superplasticizers has been tried, but these efforts have been largely unsuccessful for several reasons. First, this practice increases the cost and complexity of making the cement composition. Second, admixtures combining superplasticizers and air detrainers can be made, but are not stable over long periods, i.e., the two components are not very miscible and phase separation eventually occurs. Some modifications to these so-called "two component" admixtures have been proposed, e.g., Great Britain patent publication 2 280 180 A, disclosing solutions of polymer in which a defoamer is dissolved in the polymer or "stably dispersed" therein in particulate form (i.e., a two-phase system.) However, systems like the aforementioned are still two-phase systems having the potential for phase separation and short shelf life. Third, previous attempts at solving the aforementioned problem of entrained air have met with mixed results at best. A particular difficulty is adding the correct air detrainer in the correct amount; if too much is added, air cannot be re-entrained. It has also been near impossible to not only predict how much air detrainer to add for a given concentration of superplasticizer to obtain a desired level of air, but to ensure that such a prediction holds for a variety of cements.

WO 95/09821 discloses imidized polycarboxylic acid polymers which are useful as cement admixtures. The polymers may be formed by reacting an acrylic polymer with an alkyl-terminated alkoxy amine and optionally a hydroxy terminated oxyalkylene.

### SUMMARY OF THE INVENTION

The present invention relates to a cement admixture comprising an air controlling polymer superplasticizer having a carbon backbone formed by polymerization of ethylenically-unsaturated carboxylic acids, wherein said backbone comprises carboxylic acid grafting sites to which are covalently attached:
a) air detraining functional side chains, which are first polyoxyalkylene groups of the general formula

   R⁴-(OA²)ₓ-Q-

   wherein OA² is a mixture of ethylene oxide (EO) and propylene oxide (PO) groups wherein the weight ratio of EO to PO groups is from 3:1 to 0.3:1; Q is O or NH; x is from 1 to 200; and R⁴ is a C₁-C₁₀ alkyl group; and
b) second polyoxyalkylene groups of the general formula

   R⁵-O- (A³O)_{y}- (A³)ₚ-N=,
wherein A³ is a C₁-C₁₀ alkylene group; y is from 1 to 200; p is from 1 to 50; and R⁵ is a C₁-C₁₀ alkyl group.

Air controlling polymer superplasticizers of the invention further include those having the structural formula 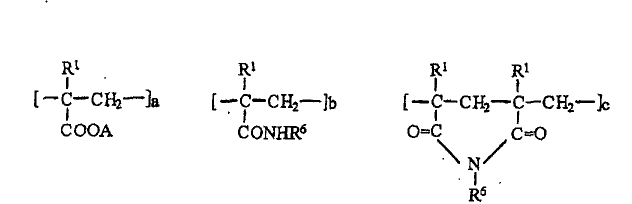 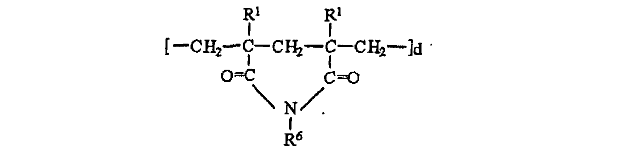 wherein each R¹ independently represents a hydrogen atom or a C₁-C₅ alkyl group; A represents a mixture of groups Z and R² where Z represents hydrogen or a monovalent or divalent metal cation, ammonium group or organic amine group and R² represents an air detraining polyoxyalkylene group (BO)ₙR³ in which BO represents a mixture of ethylene oxide (EO) and propylene oxide (PO) groups wherein the weight ratio of EO to PO groups is from 3:1 to 0.3:1, R³ represents a C₁-C₁₀ alkyl group and n represents an integer from 1 to 200, or mixtures thereof; R⁶ represents a polyoxyalkylene group of the general formula

R⁵-O-(A³O)_{y}-(A³)ₚ-,

wherein A³ is a C₁-C₁₀ alkylene group; y is from 1 to 200; p is from 1 to 50; and R⁵ is a C₁ to C₁₀ alkyl group; and a, b, c and d are numerical values representing molar percentage of the polymer's structure such that a is from about 1 to 99; the sum of c+d is from 0 to the numerical value of (100-a); and b is a remainder value of [100-(a+c+d)].

### DETAILED DESCRIPTION OF THE INVENTION

As used herein, the term "superplasticizer" refers to a class of compounds which are capable of functioning as water-reducing admixtures or superplasticizers, depending on the compound and the amount of it added to a cement composition. "Water-reducing admixture" and "superplasticizer" are terms of art which reference the relative water-reducing ability of a material. Water-reducing admixtures provide a water reduction capability of 5% to 12% (ASTM C-494 Type A or Type D), while superplasticizers provide water reduction in excess of 12% (ASTM C-494 Type F or Type G.) Superplasticizers also produce flowing concrete according to ASTM C-1017. For brevity and convenience the copolymers of this invention are referred to herein simply as superplasticizers. This term includes polymers which function as water reducing admixtures or superplasticizers, as defined above.

The term "cement composition" as used herein refers to pastes, mortars, grouts such as oil well cementing grouts, and concrete compositions comprising a hydraulic cement binder. The terms "paste", "mortar" and "concrete" are terms of art; pastes are mixtures composed of a hydraulic cement binder (usually, but not exclusively, Portland cement, and may also include fly ash, blast furnace slag, and silica fume or other materials commonly included in such cements) and water; mortars are pastes additionally including fine aggregate, and concretes are mortars additionally including coarse aggregate. The cement compositions of this invention are formed by mixing required amounts of certain materials, e.g., a hydraulic cement, water, and fine or coarse aggregate, as may be applicable to make the particular cement composition being formed.

We have discovered that polymers as described herein are very effective as superplasticizers when admixed into hydraulic cement compositions. Hydraulic cement slurries containing the superplasticizers of this invention also exhibit a low slumploss over time. Moreover, introduction of the polymers into cement compositions as superplasticizers does not result in the often unstable or uncontrollable air entrainment associated with many superplasticizers, particularly those of the type described hereinabove.

Air controlling polymer superplasticizers of the invention have a carbon backbone formed by polymerization of ethylenically-unsaturated carboxylic acids, wherein said backbone comprises carboxylic acid grafting sites to which are covalently attached a) air detraining functional side chains. The carbon backbone may optionally contain intervening atoms like oxygen (i.e., ether linkage). The grafting sites are the point of covalent attachment of the air detraining functional side chains. We find it preferable that the air detraining functional side chains be grafted onto the polycarboxylic acid backbone in making air controlling polymer superplasticizers of the invention; however, "grafting" per se is not necessary, but other suitable means of ensuring attachment of the air detraining functional side chains to the backbone may be used. Suitable grafting sites include free carboxylic acid (or salt thereof) groups. Carbon backbones may be made by polymerization of ethylenically-unsaturated monomers, preferably ethylenically-unsaturated carboxylic acids (e.g., allyl carboxylic acids) such as acrylic, methacrylic, maleic, fumaric, citraconic, itaconic, (meth)allylsulfonic, vinyl sulfonic, sulfoethyl(meth)acrylic, 2-(meth)acrylamido 2-methylpropane sulfonic, mesaconic, or dicarboxylic acid half-esters. Preferred polycarboxylic acid carbon backbones are, e.g., polyacrylic or polymethacrylic acid. 5-to 200-mers are preferred, more preferably 5- to 150-mers, and 5- to 100-mers particularly preferred. Preferably about 5% or more of the carboxylic acid groups on the polycarboxylic acid backbone remain unesterified, more preferably about 10% or more.

The air detraining functional side chains are chemical groups which function to stabilize entrained air quality and level, and are covalently attached to the grafting sites of the carbon backbone. In general, incorporation of the air detraining functional side chains in the air controlling polymer superplasticizers of the invention, has been found to produce cement compositions having measured air (ASTM test method C-231 Type B Meter) of ≤ about 3.5%, preferably ≤3%, more preferably ≤2.0%. The air-detraining side chains are polyoxyalkylene groups of the general formula

**R**^{**4**}**-(OA**^{**2**}**)**_{**x**}**-Q-**

wherein
Q = O or NH;
A² = as defined below;
x = 1 to 200; and
R⁴ = C₁-C₁₀ alkyl.

In the air detraining functional side chains used in the invention the OA² groups are a mixture of ethylene oxide ("EO") and propylene oxide ("PO") with a weight ratio of EO/PO in the air detraining functional side chain from about 3:1 to 0.3:1. Air detraining performance appears to be particularly good when the weight ratio of EO/PO is in this range, preferably from about 1.5:1 to 0.6:1. Q is preferably 0, and x is preferably 1 to 100. R⁴ is advantageously butyl, preferably a n-butyl group. We have found a range of polyoxyalkylene alcohols available from Huntsman Chemical Corporation (Houston, Texas) under the tradename JEFFOX to function well when incorporated as air detraining functional side chains in air controlling polymer superplasticizers of the invention, e.g., JEFFOX WL5000 and WL660. These polyoxyalkylene alcohols have number average molecular weights of about 3500 and 1850, respectively, and have the formula **(C**_{**4**}**H**_{**9**}**)(OA**^{**2**}**)**_{**x**}**OH,** where OA² is a mixture of EO and PO, and the EO/PO weight ratio is ≈ 1 : 1.

Certain polyoxyalkylene amines are also grafted onto/attached to the carbon backbone, i.e., having the general formula

**R**^{**5**}**-O-(A**^{**3**}**O)**_{**y**}**-(A**^{**3**}**)**_{**p**}**-NH**_{**2**}

wherein
A³ = C₁ - C₁₀ alkylene;
y = 1 to 200;
p = 1 to 50; and
R⁵ = C₁ - C₁₀ alkyl.

Such polyoxyalkylene amines may be grafted or attached to the carbon backbone by an amide and/or imide linkage, in which case the attached group would have the formula **R**^{**5**}**-O-(A**^{**3**}**O)**_{**y**}**-(A**^{**3**}**)**_{**p**}**-N=** (note that the "=" sign is meant to signify two covalent bonds to other atoms, for example, to two carbonyl carbons on the backbone, i.e., imide linkage, or to a hydrogen atom and a carbonyl carbon on the backbone .) In preferred polyoxyalkylene amines, A³ = C₂-C₅ alkylene; more preferably, the A³O groups are a mixture of EO and PO. An EO/PO weight ratio of about 7 : 1 to 0.5 : 1 has been found suitable. y is preferably in the range of 1 to 100. p is preferably in the range of 1 to 5, more preferably 1 to 2. R⁵ is preferably methyl (CH₃-). For example, polyoxyalkylene amines available from Huntsman Chemical Corporation (Houston, Texas) under the tradename JEFFAMINE have been found suitable in the invention, e.g., JEFFAMINE M1000 and M2070, having number average molecular weights corresponding to their respective product numbers. The JEFFAMINEs have the formula **CH**_{**3**}**O(A**^{**3**}**O)**_{**y**}**CH**_{**2**}**CH(CH**_{**3**}**)NH**_{**2**}, where A³O is a mixture of EO and PO.

The mole ratio of polyacrylic acid to a) polyoxyalkylene amine and b) polyoxyalkylene alcohol is generally about 2 : 1 to 9 : 1, and the weight ratio of a) to b) is generally about 20 : 1 to 2 : 1. It can easily be seen that by varying the amount of the polyoxyalkylene alcohol side chains grafted onto the backbone, superplasticizers can be made in accordance with the invention which will produce corresponding variance in entrained air. One preferred air controlling polymer superplasticizer of the invention comprises polyacrylic acid ("PAA") to which has been grafted a) polyoxyalkylene amines of the formula **CH**_{**3**}**O(A**^{**3**}**O)**_{**y**}**CH**_{**2**}**CH(CH**_{**3**}**)NH**_{**2**}, where A³O is a mixture of EO and PO and the EO/PO weight ratio is from about 5 : 1 to 0.5 : 1 and b) polyoxyalkylene alcohols of the formula **(C**_{**4**}**H**_{**9**}**)(OA**^{**2**}**)**_{**x**}**OH**, where OA² is a mixture of EO and PO and the EO/PO weight ratio is ≈ 1:1.

Air controlling polymer superpiasticizers of the invention further include those having the formula 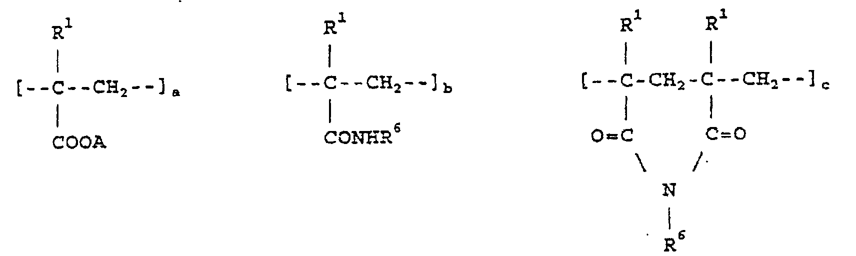 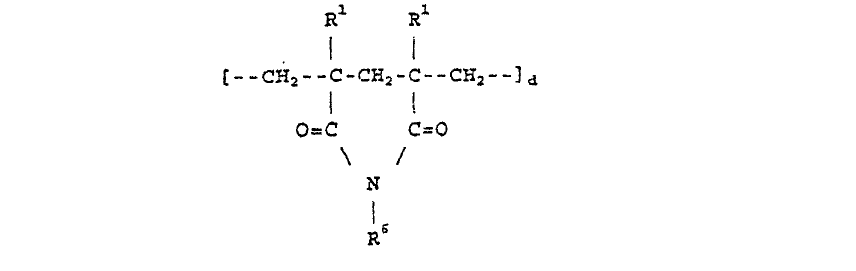 wherein the various groups are defined above.
a is preferably from about 30 to 99, more preferably from 50 to 99. In the R² group, of formula (BO)ₙR³, R³ preferably represents a C₁-C₄ alkyl group, and n represents an integer of from 1-100. The BO groups are a mixture of EO and PO in a weight ratio from about 3:1 to 0.3:1. Air detraining performance appears to be particularly good when the weight ratio of EO/PO is within this range, preferably from about 1.5:1 to 0.6:1. R⁴ is advantageously butyl, preferably a *n*-butyl group.
R⁶ represents a polyoxyalkylene group represented by **R**^{**5**}**-O-(A**^{**3**}**O)**_{**y**}**-(A**^{**3**}**)**_{**p**}**-,** wherein A³ = C₁ - C₁₀ alkylene; y = 1 to 200; p = 1 to 50; and R⁵ = C₁ - C₁₀ alkyl. Preferably, A³ = C₂ - C₅ alkylene; more preferably, the A³O groups are a mixture of EO and PO. An EO/PO weight ratio of about 7 : 1 to 0.5: 1 has been found suitable. y is preferably in the range of 1 to 100. p is preferably in the range of 1 to 5, more preferably 1 to 2. R⁵ is preferably methyl (CH₃-). In a particularly preferred embodiment, a) R⁶ is of the formula **CH**_{**3**}**O(A**^{**3**}**O)**_{**y**}**CH**_{**2**}**CH(CH**_{**3**}**)-**, where A³O is a mixture of EO and PO, and the EO/PO weight ratio is from about 5 : 1 to 0.5 : 1, and b) R² is of the **(C**_{**4**}**H**_{**9**}**)(OA**^{**2**}**)**_{**x**}**O-,** where OA² is a mixture of EO and PO and the EO/PO weight ratio is ≈ 1 : 1.

The air controlling polymer superplasticizer may be made by grafting a polyoxyalkylene amine onto a polycarboxylic acid backbone (amidization/imidization reaction), then grafting onto the polycarboxylic acid backbone an air detraining polyoxyalkylene alcohol (esterification reaction). The reactions are carried out in an oxygen-free atmosphere, in a reaction vessel having a condenser for facilitating water removal, e.g., a jacketed-coiled condenser fitted with a Dean-Stark trap. (During the course of the reactions, water (a reaction by-product) is removed to drive the reaction to completion.) In the amidization/imidization step, the reactants which are contacted with each other and heated to 100°C to about 185°C for about 1 to 8 hours, preferably about 1.5 to 2.5 hours, or until the amidization/imidization is complete. (Reference is made to U.S. Patent No. 5,393,343, for further details of the reaction.) For the esterification reaction, a catalyst is added to catalyze the esterification of the polyoxyalkylene alcohol to the graft polymer. Any agent which will catalyze ester formation may be used (i.e., dehydrating agents, defined herein as those which facilitate the formation of water in chemical reactions; such as naphthalene sulfonic acid, carbodiimide, or *p*-toluene sulfonic acid), with *p*-toluene sulfonic acid preferred. The temperature is maintained at 100°C to about 185°C for about 1 to 8 hours, preferably about 1.5 to 2.5 hours, or until the esterification is complete. Water by-product is removed as above. The reaction vessel is cooled, the reaction product is neutralized and the total solids of the mixture are adjusted with solvent if desired or necessary for addition to a cement composition in a desired dosage. Other methods of preparation may be used as long as the resultant polymer has the characteristics described herein. For example, certain polyoxyalkylene superplasticizers of the type obtained by polymerization of ethylenically-polymerizable carboxylic acids and ethylenically-polymerizable polyoxyalkylenes, as exemplified by U. S. Patent Nos. 4,471,100 and 4,946,904, comprise a carbon backbone and grafting sites (carboxylic acid groups). It is intended that air detraining functional side chains as described herein may be esterified to the free carboxylic acid groups of these polyoxyalkylene superplasticizers to impart the benefits detailed herein. Such resulting air-controlling polymer superplasticizers are intended to be within the scope of our invention.

The air controlling polymer superplasticizer-treated cement composition can be formed at any stage of the cement's formation or use. For example, the polymer can be mixed at the cement mill with clinker cement raw material during its grinding to form cement powder. It can also be applied to the cement powder during its blending with other dry materials to prepare a specific type of cement, such as blended cement, pozzolanic cement and the like. Alternately, the improved cement can be formed *in situ* during the course of preparing a cement composition such as a mortar mix or a concrete. The air controlling polymer superplasticizer can be added conventionally as a aqueous solution as part of the water of hydration, or can be added separately. In the latter method of application, the water of the aqueous polymer solution should be calculated as part of the total water content of the cement composition.

The amount of air controlling polymer superplasticizer admixed into hydraulic cement compositions, whether as a dry blend of cement and polymer or as formed in situ as part of the formation of a wet unset cement composition, should be an effective amount to either allow reduction of the water content while retaining equivalent slump of a blank composition, or increase the slump while maintaining the water to cement ratio, whichever is desired. The specific amount of this superplasticizer admixture for either purpose can be readily determined and will depend on the cement composition, the ratio of components of the composition, and the degree of fluidity desired. Generally the amount will be at least 0.005 weight percent, and usually in the range of 0.005 to 5, preferably 0.03 to 1.0 weight percent, based on the weight of hydraulic cement binder in the composition. A more preferred amount, similarly based, is about 0.05 to 0.3 weight percent.

Cement compositions formed with the invention have controlled, stable air content and a significantly higher degree of flowability (higher degree of slump), than compositions formed with conventional hydraulic cement, and are capable of retaining their high degree of slump over a sustained period of time allowing cement technicians an extended period to work the cement composition into its final shape. As stated above, this beneficial combination of properties has not been attainable with a polymer superplasticizer of this type until now. Cement compositions made in accordance with the invention also achieve initial set without exhibiting excessive retardation. Thus, the use of this cement composition does not cause delay of the working time required to form a particular structure.

Conventional cement additives, such as air entrainers, water proofing agents, strength enhancers, corrosion inhibitors, and curing accelerators can be used with the subject cement additive. These additives can be mixed with the cement composition prior to, along with or subsequent to the addition of the present cement additive. A benefit of the polymer superplasticizers of the invention is that, for a given dosage of superplasticizer, air content and stability is consistent over a range of cement types, thus allowing for the addition of air entrainers to impart a predictable level of air.

The following examples are given for illustrative purposes only and are not meant to be a limitation on the claims appended hereto. All parts and percentages are by weight unless otherwise indicated.

Polymer superplasticizers in accordance with the inventionwere made according to the following procedure. Polycarboxylic acid (MW ≈ 5000), polyoxyalkylene alcohol, and polyoxyalkylene amine were combined in a reaction vessel equipped with a N₂ sweep, mechanical stirrer and a jacketed-coiled condenser fitted with a Dean-Stark trap. The polyoxyalkylene amine was grafted onto the polycarboxylic acid backbone at 140°C to 185°C for two hours. *p*-toluene sulfonic acid was added as an esterification catalyst, and the reaction mixture was heated for an additional two hours, to allow for the esterification of the polyoxyalkylene alcohol onto the polycarboxylic acid backbone. Upon cooling to ≈ 50°C, the reaction product was neutralized with 40% (wt/wt) aqueous NaOH and total solids adjusted to 40% with deionized water. A comparative superplasticizer ("Comparative #1") was made according to Example 1 of U. S. Patent No. 5,393,343. The makeup of the polymer superplasticizers made as above appears in Table 1.

**TABLE 1**

| Admixture | PAA/polyoxyalkylene compounds (mole ratio) | Polyoxyalkylene amine /polyoxyalkylene glycol (weight ratio) |
|---|---|---|
| Invention #1† | 3.5 : 1 | 90 : 10 |
| Invention #2† | 3.5 : 1 | 80 : 20 |
| Invention #3† | 3.5 : 1 | 90 : 10 |
| Invention #4† | 3.5 : 1 | 90 : 10 |

| | | |
|---|---|---|
| ^{†} polyoxyalkylene amine: JEFFAMINE M2070 polyoxyalkylene alcohol: JEFFOX WL5000 | | |

All concrete testing was conducted as follows. The mixer interior was wet with water, which was allowed to drain out by inverting the mixer drum. The drum was righted and 28 kg coarse aggregate and 24 kg fine aggregate were added to the drum and mixed briefly (about 20 seconds) before adding half of the mix water (calculated to provide a w/c ratio of 0.5) and mixing for another 20 seconds. The remainder of the mix water was added, holding 75-100ml in reserve for rinsing the container holding the superplasticizer admixture. Air entrainer (if desired) was added at this point and mixed for approximately another minute. 11 kg Portland cement was added and after another minute for mixing, superplasticizer admixture (and defoamer if desired) was added, with the reserve water used for rinsing the container. Slump and slumploss were measured in accordance with ASTM C-143, and % air was measured in accordance with ASTM C-231 Type B Meter. Defoamer was PLURONIC 25R2 and the dosage was 0.0025% s/s (admixture solids based on the total cement solids in the concrete). Air entrainer was DARAVAIR 1000 (Grace Construction Products). Superplasticizer was dosed at 0.12% s/s.

### EXAMPLE 1

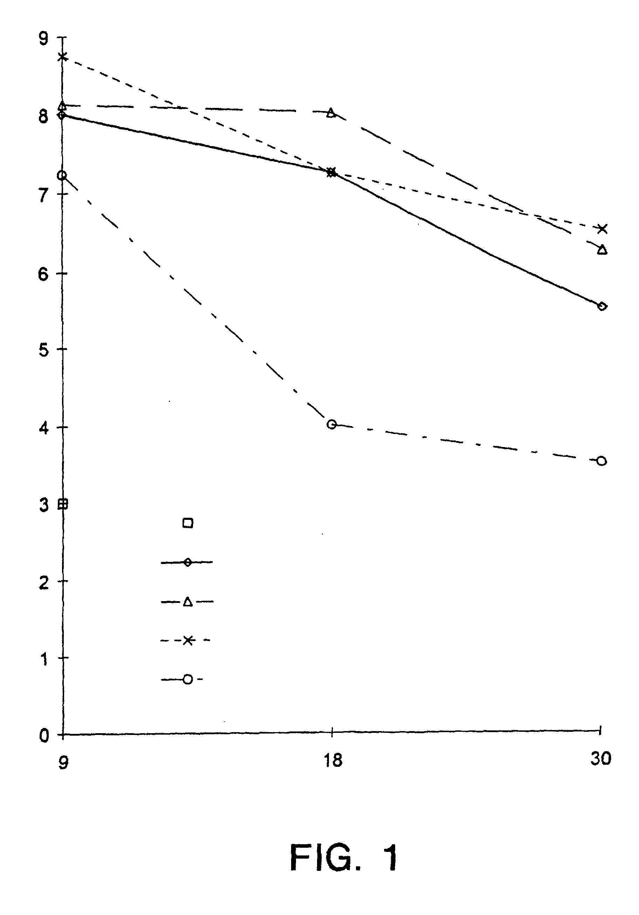

Table II, the results of which are shown graphically in Figure 1, demonstrate slump and slumploss performance of the superplasticizers of the invention that are comparable to Comparative #1. This demonstrates that one may use the inventive superplasticizers in conjunction with air entrainers, if desired, without sacrificing slump performance.

**TABLE II**

| | Slump (in.) | | |
|---|---|---|---|
| | 9 min | 18 min | 30 min |
| BLANK | 3.0 | | |
| "Invention #1" | 8 | 7.25 | 5.5 |
| "Invention #1"+AEA (0.5 oz./cwt) | 8.13 | 8 | 6.25 |
| "Comparative #1" + Defoamer + AEA (1.0 oz./cwt) | 8.75 | 7.25 | 6.5 |
| "Comparative #1" + Defoamer | 7.25 | 4 | 3.5 |

### EXAMPLE 2

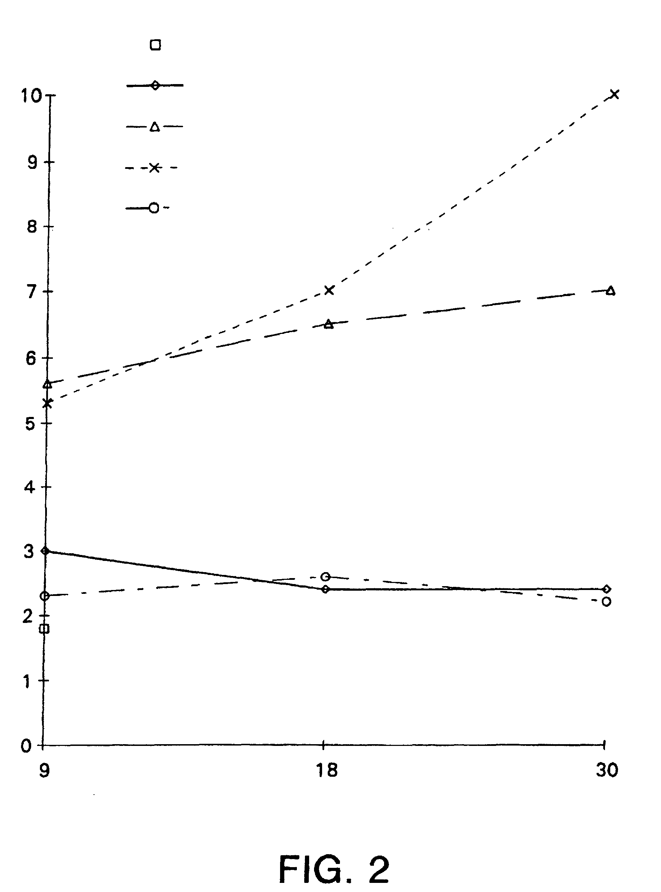

Table III, the results of which are shown graphically in Figure 2, demonstrate that the superplasticizers of the invention entrain low and stable air in a manner comparable to Comparative #1 with air detrainer. However, when used in conjunction with air entrainer, air level over time is clearly more stable with the invention over that of Comparative #1.

**TABLE III**

| | Air (%) | | |
|---|---|---|---|
| | 9 min | 18 min | 30 min |
| BLANK | 1.8 | | |
| "Invention #1" | 3.0 | 2.4 | 2.4 |
| "Invention #1"+AEA (0.5 oz./cwt) | 5.6 | 6.5 | 7.0 |
| "Comparative #1" + Defoamer + AEA (1.0 oz./cwt) | 5.3 | 7.0 | 10.0 |
| "Comparative #1" + Defoamer | 2.3 | 2.6 | 2.2 |

### EXAMPLE 3

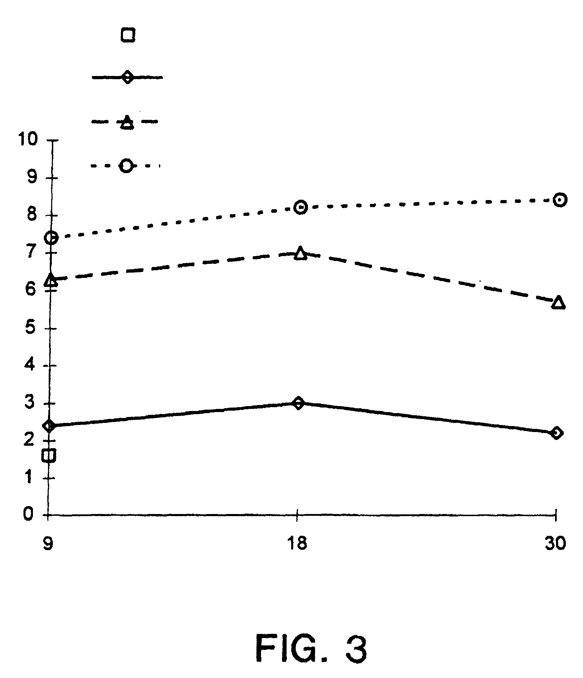

Table IV, the results of which are shown graphically in Figure 3, demonstrates how the superplasticizers of the invention may be made with different proportions of air detraining functional side chains to produce an air controlling superplasticizer which imparts different levels of air.

**TABLE IV**

| | | AIR (%) | |
|---|---|---|---|
| | 9 min | 18 min | 30 min |
| BLANK | 1.6 | | |
| "Invention #2" | 2.4 | 3 | 2.2 |
| "Invention #2"+AEA 0.5 oz./cwt | 6.3 | 7 | 5.7 |
| "Invention #3"+AEA 0.5 oz./cwt | 7.4 | 8.2 | 8.4 |

## Claims

1. An air controlling polymeric superplasticizer having a carbon backbone formed by polymerization of ethylenically-unsaturated carboxylic acids, wherein said backbone comprises carboxylic acid grafting sites to which are covalently attached:
a) air detraining functional side chains, which are first polyoxyalkylene groups of the general formula
R⁴-(OA²)ₓ-Q-
wherein OA² is a mixture of ethylene oxide (EO) and propylene oxide (PO) groups wherein the weight ratio of EO to PO groups is from 3:1 to 0.3:1; Q is O or NH; x is from 1 to 200; and R⁴ is a C₁-C₁₀ alkyl group; and
b) second polyoxyalkylene groups of the general formula
R⁵-O-(A³O)_{y}-(A³)ₚ-N=,
wherein A³ is a C₁-C₁₀ alkylene group; y is from 1 to 200; p is from 1 to 50; and R⁵ is a C₁-C₁₀ alkyl group.

2. A superplasticizer according to claim 1 wherein said ethylenically-unsaturated carboxylic acids are selected from acrylic, methacrylic, maleic, fumaric, citraconic, itaconic, (meth)allylsulfonic, vinyl sulfonic, sulfo ethyl (meth)acrylic, 2-(meth) acrylamido 2-methylpropane sulfonic, mesaconic acid, or dicarboxylic acid half-esters thereof.

3. A superplasticizer according to claim 1 wherein said carbon backbone is polyacrylic acid.

4. A superplasticizer according to claim 1, 2 or 3 wherein the weight ratio of EO to PO groups is from 1.5:1 to 0.6:1.

5. A superplasticizer according to claim 4 wherein the weight ratio of EO to PO groups is about 1:1.

6. A superplasticizer according to any one of the preceding claims wherein x is from 1 to 100; and R⁴ is a C₁-C₄ alkyl group.

7. A superplasticizer according to any one of the preceding claims wherein A³ is a C₂-C₅ alkylene group, y is from 1 to 100; p is from 1 to 5; and R⁵ is methyl.

8. A superplasticizer according to any one of the preceding claims wherein A³ is a mixture of EO and PO groups.

9. A superplasticizer according to claim 1 wherein the carbon backbone is polyacrylic acid wherein
a) said air detraining functional side chain is of the general formula
(C₄H₉) (OA²)ₓO-,
where OA² is a mixture of EO and PO groups and the EO/PO weight ratio is about 1:1; and
b) said second polyoxyalkylene groups are of the general formula
CH₃O(A³O)_{y}CH₂CH(CH₃)N=,
where A³O is a mixture of EO and PO groups and the EO/PO weight ratio is from about 5:1 to 0.5:1; and
where the molar ratio of polyacrylic acid to a) and b) is from 2:1 to 9:1, and the weight ratio of a) to b) is from 20:1 to 2:1.

10. An air controlling polymeric superplasticizer having the structural formula 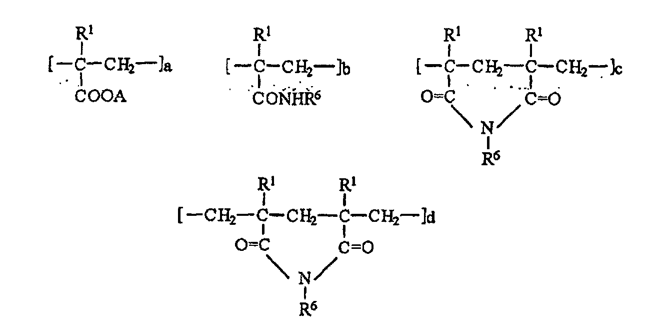 wherein each R¹ independently represents a hydrogen atom or a C₁-C₅ alkyl group; A represents a mixture of groups Z and R² where Z represents hydrogen or a monovalent or divalent metal cation, ammonium group or organic amine group and R² represents an air detraining polyoxyalkylene group (BO)ₙR³ in which BO represents a mixture of ethylene oxide (EO) and propylene oxide (PO) groups
wherein the weight ratio of EO to PO groups is from 3:1 to 0.3:1, R³ represents a C₁-C₁₀ alkyl group and n represents an integer from 1 to 200, or mixtures thereof; R⁶ represents a polyoxyalkylene group of the general formula
R⁵-O-(A³O)_{y}-(A³)ₚ-,
wherein A³ is a C₁-C₁₀ alkylene group; y is from 1 to 200; p is from 1 to 50; and R⁵ is a C₁ to C₁₀ alkyl group; and a, b, c and d are numerical values representing molar percentages of the polymer's structure such that a is from about 1 to 99; the sum of c+d is from 0 to the numerical value of (100-a); and b is a remainder value of [100 - (a+c+d)].

11. A superplasticizer according to claim 10 wherein R² represents an air detraining polyoxyalkylene group (BO)ₙR³ in which R³ represents a C₁-C₄ alkyl group, and n is from 1 to 100.

12. A superplasticizer according to claim 10 or 11
wherein a is from 30 to 99.

13. A superplasticizer according to claim 12 wherein a is from 50 to 99.

14. A superplasticizer according to any one of claims 10 to 13 wherein R² represents a group (BO)ₙR³ in which the weight ratio of EO to PO groups is from 1.5:1 to 0.6:1.

15. A superplasticizer according to claim 14 wherein the weight ratio of EO to PO groups is about 1:1.

16. A superplasticizer according to any one of claims 10 to 15 wherein A³ is a C₂-C₅ alkylene group; y is from 1 to 100; p is from 1 to 5; and R⁵ is methyl.

17. A superplasticizer according to any one of claims 10 to 16 wherein A³ is a mixture of EO and PO groups.

18. A superplasticizer according to claim 17 wherein
a) R⁶ is of the formula
CH₃O (A³O)_{y}CH₂CH (CH₃)-
where A³O is a mixture of EO and PO groups and the EO/PO weight ratio is from about 5:1 to 0.5:1, and
b) R² is of the formula
(C₄H₉) (OA²)ₓO-
where OA² is a mixture of EO and PO groups, and the EO/PO weight ratio is about 1:1.

19. A cement composition comprising a hydraulic cement and an air controlling polymeric superplasticizer as defined in any one of the preceding claims.

20. A cement composition according to claim 19 further comprising an air entraining component or a strength enhancer.

21. A method of making an air controlling hydraulic cement composition comprising the step of adding to a hydraulic cement mix an air controlling polymeric superplasticizer as defined in any one of claims 1 to 18 to form a hydraulic cement composition having an air level of 3.5%, as measured by ASTM C-231 Type B Meter.

## Patentansprüche

1. Luftregulierender polymerer Superweichmacher mit einem Kohlenstoffgerüst, das durch Polymerisation von ethylenisch ungesättigten Carbonsäuren gebildet worden ist, wobei das Gerüst Carbonsäurepfropfstellen umfasst, an die kovalent gebunden sind:
a) luftaustragende funktionelle Seitenketten, die erste Polyoxyalkylengruppen der allgemeinen Formel
R⁴ - (OA²)ₓ-Q-
sind, in der OA² eine Mischung aus Ethylenoxid (EO)-und Propylenoxid (PO)-Gruppen ist, wobei das Gewichtsverhältnis von EO- zu PO-Gruppen 3 : 1 bis 0,3 : 1 beträgt, Q O oder NH ist, x 1 bis 200 ist und R⁴ eine C₁- bis C₁₀-Alkylgruppe ist, und
b) zweite Polyoxyalkylengruppen der allgemeinen Formel
R⁵-O-(A³O)_{y}-(A³)ₚ-N=,
in der A³ eine C₁- bis C₁₀-Alkylengruppe ist, y 1 bis 200 ist, p 1 bis 50 ist und R⁵ eine C₁- bis C₁₀-Alkylgruppe ist.

2. Superweichmacher nach Anspruch 1, bei dem die ethylenisch ungesättigten Carbonsäuren ausgewählt sind aus Acrylsäure, Methacrylsäure, Maleinsäure, Fumarsäure, Citraconsäure, Itakonsäure, (Meth)allylsulfonsäure, Vinylsulfonsäure, Sulfoethyl(meth)acrylsäure, 2-(Meth)arylamido-2-methylpropansulfonsäure, Mesaconsäure oder Dicarbonsäurehalbestern derselben.

3. Superweichmacher nach Anspruch 1, bei dem das Kohlenstoffgerüst Polyacrylsäure ist.

4. Superweichmacher nach Anspruch 1, 2 oder 3, bei dem das Gewichtsverhältnis von EO- zu PO-Gruppen 1,5 : 1 bis 0,6 : 1 beträgt.

5. Superweichmacher nach Anspruch 4, bei dem das Gewichtsverhältnis von EO- zu PO-Gruppen etwa 1 : 1 ist.

6. Superweichmacher nach einem der vorhergehenden Ansprüche, bei dem x 1 bis 100 ist und R⁴ eine C₁ - bis C₄-Alkylgruppe ist.

7. Superweichmacher nach einem der vorhergehenden Ansprüche, bei dem A³ eine C₂- bis C₅-Alkylengruppe ist, y 1 bis 100 ist, p 1 bis 5 ist und R⁵ Methyl ist.

8. Superweichmacher nach einem der vorhergehenden Ansprüche, bei dem A³ eine Mischung aus EO- und PO-Gruppen ist.

9. Superweichmacher nach Anspruch 1, bei dem das Kohlenstoffgerüst Polyacrylsäure ist, wobei
a) die luftaustragende funktionelle Seitenkette die allgemeine Formel
(C₄H₉) (OA²)ₓO-
aufweist, in der OA² eine Mischung aus EO- und PO-Gruppen ist und das EO/PO-Gewichtsverhältnis etwa 1 : 1 beträgt, und
b) die zweiten Polyoxyalkylengruppen die allgemeine Formel
CH₃O(A³O)_{y}CH₂CH(CH₃)N=
aufweisen, in der A³O eine Mischung aus EO- und pO-Gruppen ist und das EO/PO-Gewichtsverhältnis etwa 5 : 1 bis 0,5 : 1 beträgt, und
wobei das molare Verhältnis von Polyacrylsäure zu a) und b) 2 : 1 bis 9 : 1 beträgt und das Gewichtsverhältnis von a) zu b) 20 : 1 bis 2 : 1 beträgt.

10. Luftregulierender polymerer Superweichmacher mit der Strukturformel 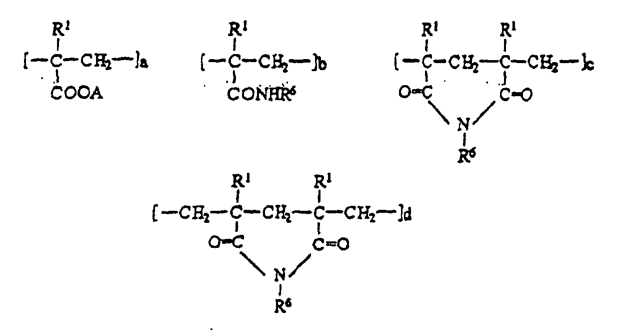 worin R¹ unabhängig ein Wasserstoffatom oder eine C₁- bis C₅-Alkylgruppe ist, A eine Mischung von Gruppen Z und R² ist, wobei Z Wasserstoff oder ein einwertiges oder zweiwertiges Metallkation, eine Ammoniumgruppe oder eine organische Amingruppe ist und R² eine luftaustragende Polyoxyalkylengruppe (BO)ₙR³ ist, in der BO eine Mischung aus Ethylenoxid (EO)-und Propylenoxid (PO)-Gruppen ist, wobei das Gewichtsverhältnis von EO- zu PO-Gruppen 3 : 1 bis 0,3 : 1 beträgt, R³ eine C₁- bis C₁₀-Alkylgruppe ist und n eine Zahl von 1 bis 200 ist, oder Mischungen derselben, R⁶ eine Polyoxyalkylengruppe mit der allgemeinen Formel
R⁵ -O- (A³O)y- (A³)ₚ-
ist, in der A³ eine C₁- bis C₁₀-Alkylengruppe ist, y 1 bis 200 ist, p 1 bis 50 ist, und R⁵ eine C₁- bis C₁₀-Alkylgruppe ist, und a, b, c und d nummerische Werte sind, die die molaren Prozentsätze der Polymerstruktur angeben, so dass a etwa 1 bis 99 ist, wobei die Summe von c + d 0 bis zum nummerischen Wert von (100-a) ist und b ein Restwert von [100 - (a+c+d)] ist.

11. Superweichmacher nach Anspruch 10, bei dem R² eine luftaustragende Polyoxyalkylengruppe (BO)ₙR³ ist, in der R³ eine C₁bis C₄-Alkylgruppe ist und n 1 bis 100 ist.

12. Superweichmacher nach Anspruch 10 oder 11, bei dem a 30 bis 99 ist.

13. Superweichmacher nach Anspruch 12, bei dem a 50 bis 99 ist.

14. Superweichmacher nach einem der Ansprüche 10 bis 13, bei dem R² eine Gruppe (BO)ₙR³ ist, in der das Gewichtsverhältnis von EO- zu PO-Gruppen 1,5 : 1 bis 0,6 : 1 beträgt.

15. Superweichmacher nach Anspruch 14, bei dem das Gewichtsverhältnis von EO- zu PO-Gruppen etwa 1 : 1 beträgt.

16. Superweichmacher nach einem der Ansprüche 10 bis 15, bei dem A³ eine C₂- bis C₅-Alkylengruppe ist, y 1 bis 100 ist, p 1 bis 5 ist und R⁵ Methyl ist.

17. Superweichmacher nach einem der Ansprüche 10 bis 16, bei dem A³ eine Mischung aus EO- und PO-Gruppen ist.

18. Superweichmacher nach Anspruch 17, bei dem
a) R⁶ die Formel
CH₃O(A³O)_{y}CH₂CH(CH₃)-
aufweist, in der A³O eine Mischung aus EO- und PO-Gruppen ist und das EO/PO-Gewichtsverhältnis etwa 5 : 1 bis 0,5 : 1 beträgt, und
b) R² die Formel
(C₄H₉) (OA²)ₓO-
aufweist, in der OA² eine Mischung aus EO- und PO-Gruppen ist und das EO/PO-Gewichtsverhältnis etwa 1 : 1 beträgt.

19. Zementzusammensetzung, die hydraulischen Zement und einen luftregulierenden polymeren Superweichmacher gemäß einem der vorhergehenden Ansprüche umfasst.

20. Zementzusammensetzung nach Anspruch 19, die ferner eine lufteinschließende Komponente oder einen Festigkeitsverbesserer umfasst.

21. Verfahren zur Herstellung einer luftregulierenden hydraulischen Zementzusammensetzung, das den Schritt der Zugabe eines luftregulierenden polymeren Superweichmachers gemäß einem der Ansprüche 1 bis 18 zu einer hydraulischen Zementmischung umfasst, um eine hydraulische Zementzusammensetzung mit einer Luftmenge von 3,5 % zu bilden, wie gemessen gemäß ASTM C-231 Typ B Meter.

## Revendications

1. Superplastifiant polymérique permettant une régulation de l'air ayant une épine dorsale de carbone formée par polymérisation d'acides carboxyliques à insaturation éthylénique, où ladite épine dorsale comprend des sites de greffe d'acide carboxylique auxquels sont attachés de manière covalente :
a) des chaînes latérales fonctionnelles débarquant l'air qui sont des premiers groupes polyoxyalkylène de la forme générale
R⁴-(OA²)ₓ-Q-
où OA² est un mélange de groupes oxyde d'éthylène (OE) et oxyde de propylène (OP) où le rapport pondéral des groupes OE à OP est de 3:1 à 0,3:1 ; Q est O ou NH ; x est de 1 à 200 ; et R⁴ est un groupe alkyle C₁-C₁₀ ; et
b) des seconds groupes polyoxyalkylène de la formule générale
R⁵-O-(A³O)_{y}-(A³)ₚ-N=,
ou A³ est un groupe alkylène C₁-C₁₀ ; y est de 1 à 200 ; p est de 1 à 50 ; et R⁵ est un groupe alkylène C₁-C₁₀.

2. Superplastifiant selon la revendication 1 où lesdits acides carboxyliques à insaturation éthylénique sont sélectionnés parmi acide acrylique, méthacrylique, maléique, fumarique, citraconique, itaconique, (méth) allylsulfonique, vinyl sulfonique, sulfo éthyl (méth) acrylique, 2-(méth) acrylamido 2-méthylpropane sulfonique, mésaconique, ou leurs hemi-esters d'acide dicarboxylique.

3. Superplastifiant selon la revendication 1 où ladite épine dorsale de carbone est un acide polyacrylique.

4. Superplastifiant selon la revendication 1, 2 ou 3 où le rapport pondéral des groupes EO à OP est de 1,5:1 à 0,6:1.

5. Superplastifiant selon la revendication 4, où le rapport pondéral des groupes OE à OP est d'environ 1:1.

6. Superplastifiant selon l'une quelconque des revendications précédentes où x est de 1 à 100 ; et R⁴ est un groupe alkyle C₁-C₄.

7. Superplastifiant selon l'une quelconque des revendications précédentes ou A³ est un groupe alkylène C₂-C₅, y est de 1 à 100 ; p est de 1 à 5 ; et R⁵ est méthyle.

8. Superperplastifiant selon l'une quelconque des revendications précédentes où A³ est un mélange de groupes OE et OP.

9. Superplastifiant selon la revendication 1 où l'épine dorsale de carbone est l'acyde polyacrylique où
a) ladite chaine latérale fonctionnelle débarquant l'air est de la formule générale
(C₄H₉) (OA²)ₓO-,
où OA² est un mélange de groupes OE et OP et le rapport pondéral OE/OP est d'environ 1:1 ; et
b) lesdits seconds groupes polyoxyalkylène sont de la forme générale
CH₃O(A³O)_{y}CH₂CH(CH₃)N=,
où A³O est un mélange de groupes OE et OP et le rapport pondéral OE/OP est d'environ 5:1 à 0,5:1 ; et
où le rapport molaire de l'acide polyacrylique à a) et b) est de 2:1 à 9:1, et le rapport pondéral de a) à b) est de 20:1 à 2:1.

10. Superplastifiant polymérique permettant une régulation de l'air ayant la formule de structure 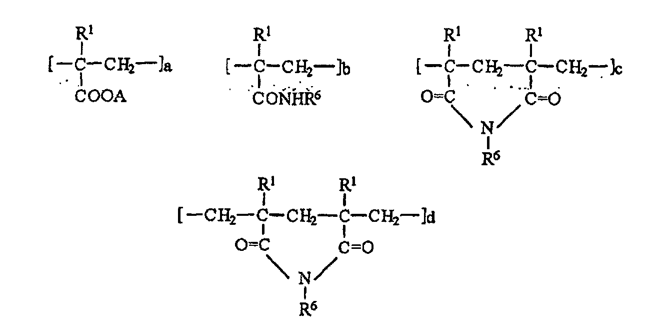 où chaque R¹ représente indépendamment un atome d'hydrogène ou un groupe alkyle C₁-C₅ ; A représente un mélange de groupes Z et R² où Z représente hydrogène ou un cation d'un métal monovalent ou divalent, un groupe ammonium ou un groupe amine organique et R² représente un groupe polyoxyalkylène débarquant l'air (BO)ₙR³ dans lequel BO représente un mélange de groupes d'oxyde d'éthylène (OE) et oxyde de propylène (OP) où le rapport pondéral des groupes DE à OP est de 3:1 à 0,3:1, R³ représente un groupe alkyle-C₁-C₁₀ et n représente un entier de 1 à 200, ou leurs mélanges ; R⁶ représnte un groupe polyoxyalkylène de la forme générale
R⁵-O(A³O)_{y}-(A)ₚ-,
ou A³ est un groupe alkylène C₁-C₁₀ ; y est de 1 à 200 ; p est de 1 à 50 ; et R⁵ est un groupe alkyle C₁ à C₁₀ ; et a, b, c et d sont des valeurs numériques représentant des pourcentages molaires de la structure de polymère de façon que a soit d'environ 1 à 99 ; la somme de c+d soit de 0 à la valeur numérique de (100-a) ; et b soit un reste de [100 - (a+c+d)].

11. Superplastifiant selon la revendication 10² où R représente un groupe polyoxyalkylène débarquant l'air (BO)ₙR³ dans lequel R³ représente un groupe alkyle C₁-C₄ et n est de 1 à 100.

12. Superplastifiant selon la revendication 10 ou 11 où a est de 30 à 99.

13. Superplastifiant selon la revendication 12 ou a est de 50 à 99.

14. Superplastifiant selon l'une quelconque des revendications 10 à 13 où R² représente un groupe (BO)ₑₙR³
dans lequel le rapport pondéral des groupes OE à OP est de 1,5:1 à 0,6:1.

15. Superplastifiant selon la revendication 14, où le rapport pondéral des groupes OE à OP est d'environ 1:1.

16. Superplastifiant selon l'une quelconque des revendications 10 à 15 où A³ est un groupe alkylène C₂-C₅ ; y est de 1 à 100 ; p est de 1 à 15 ; et R⁵ est méthyle.

17. Superplastifiant selon l'une quelconque des revendications 10 à 16 où A³ est un mélange de groupes OE et OP.

18. Superplastifiant selon la revendication 17 où
a) R⁶ est de la formule
CH₃O(A³O)_{y}CH₂CH(CH₃)-
où A³O est un mélange de groupes OE et OP et le rapport pondéral OE/OP est d'environ 5:1 à 0,5:1, et
b) R² est de la formule
(C₄H₉) (OA²)ₓO-
où OA² est un mélange de groupes OE et OP, et le rapport pondéral OE/OP est d'environ 1:1.

19. Composition de ciment comprenant un ciment hydraulique et un superplastifiant polymérique permettant une régulation de l'air tel que défini dans l'une quelconque des revendications précédentes.

20. Composition de ciment selon la revendication 19 comprenant de plus un composant débarquant l'air ou un agent améliorant la résistance.

21. Méthode de production d'une composition de ciment hydraulique permettant une régulation de l'air comprenant l'étape d'ajouter, à un mélange de ciment hydraulique, un superplastifiant polymérique permettant une régulation de l'air tel que défini dans l'une quelconque des revendications 1 à 18 pour former une composition de ciment hydraulique ayant un niveau d'air de 3,5% en mesurant par l'appareil de mesure ASTM C-231 Type B.
